(19) **Europäisches Patentamt**

**European Patent Office**

**Office européen des brevets**

(11) **EP 1 180 810 A2**

(12) **EUROPEAN PATENT APPLICATION**

(43) Date of publication:
**20.02.2002 Bulletin 2002/08**

(51) Int Cl.[7]: **H01M 4/50**, H01M 4/48

(21) Application number: **01119329.9**

(22) Date of filing: **10.08.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **18.08.2000 JP 2000248961**
**18.08.2000 JP 2000248962**

(71) Applicant: **NISSAN MOTOR CO., LTD.**
**Yokohama-shi Kanagawa-ken (JP)**

(72) Inventors:
• **Ogawa, Tomaru**
**Yokohama-shi, Kanagawa-ken (JP)**
• **Takahashi, Hidekazu**
**Yokohama-shi, Kanagawa-ken (JP)**
• **Katamura, Junji**
**Yokohama-shi, Kanagawa-ken (JP)**
• **Munakata, Fumio**
**Yokohama-shi, Kanagawa-ken (JP)**

(74) Representative: **Weber, Joachim, Dr.**
**Hoefer, Schmitz, Weber & Partner Patentanwälte**
**Gabriel-Max-Strasse 29**
**81545 München (DE)**

(54) **Positive electrode active material for rechargeable lithium-ion battery**

(57)     A positive electrode active material is a layered lithium manganese compound represented by a general formula $Li_{1-x}MO_2$, where x is a lithium-deficient quantity and larger than 1/5, and M is manganese or metals of two or more kinds containing manganese as a main component. The metals are preferably 3d-transition metals. The positive electrode active material has a high capacity and is excellent in structure stability. A rechargeable lithium-ion battery uses a positive electrode material containing the positive electrode active material and is excellent in cyclic stability.

FIG.11

EP 1 180 810 A2

## Description

BACKGROUND OF THE INVENTION

1. Field of the Invention

The present invention relates to a positive electrode active material using a lithium manganese compound of layered structure and to a rechargeable lithium-ion battery using the positive electrode active material. The rechargeable lithium-ion battery can be used as a battery for a mobile unit, particularly for an electric vehicle such as an EV (Electric Vehicle) and an HEV (Hybrid Electric Vehicle).

2. Description of the Related Art

In an environmental problem of recent years, development of an electric vehicle that is of zero emission has been strongly desired. Moreover, among various secondary batteries, a rechargeable lithium-ion battery has been expected as a secondary battery for an electric vehicle because it has a high charge/discharge voltage and a large charge/discharge capacity.

As a positive electrode active material for the rechargeable lithium-ion battery described above, $LiCoO_2$ has heretofore been used. However, cobalt has been expensive, and stability thereof has been problematic. Therefore, use of a lithium manganese compound $(LiMn_2O_4)$ of spinel structure as a positive electrode active material has been proposed (Japanese Laid-Open Patent Publications Hei 11 -171550 (published in 1999) and Hei 11-73962(published in 1999)).

The spinel type $LiMn_2O_4$ is more stable, and better in cyclic resistance in comparison with the conventional $LiCoO_2$. However, the cyclic resistance thereof at high temperature is not sufficient, thus causing a problem that the positive electrode material is dissolved in an electrolyte leading to deterioration of the negative electrode in performance. As means for solving this problem, a technique for substituting a part of Mn for a transition metal element or a typical metal element has been attempted.

Moreover, the $LiMn_2O_4$ with Mn partially substituted for various elements for the purpose of improving the cyclic resistance at high temperature has been disclosed in Japanese Laid-Open Patent Publication Hei 11-71115(published in 1999). However, in the $LiMn_2O_4$ disclosed above, distortion is sometimes brought into a crystal structure thereof, leading to deterioration of the cyclic resistance at room temperature. Furthermore, when substitution of a large quantity of elements is performed in order to stabilize the crystal structure for the purpose of improving the cyclic resistance, lowering of capacity of the positive electrode active material is brought.

In addition, though both of a large capacity and high cyclic resistance are required for the positive electrode active material, the capacity of the spinel type $LiMn_2O_4$ is 100 mAh/g, which is lower than the capacity of 140 mAh/g of the conventionally used $LiCoO_2$ based material.

As described above, the $LiCoO_2$ is unstable though it has a large capacity. Meanwhile, the spinel type $LiMn_2O_4$ is not sufficient in cyclic resistance and the capacity thereof is small though it is stabler than the $LiCoO_2$. Therefore, desired is development of a novel positive electrode active material provided with both of the large capacity and the high resistance.

SUMMARY OF THE INVENTION

In order to discover a novel and high-capacity positive electrode active material of a lithium compound, research has been carried out based on a study in crystal chemistry (Japanese Patent Publication No. 2870741). In recent years, layered LiMnO2 (i.e. LiMnO2 of layer structure) based material with a much larger capacity than the conventional LiCoO2 based material has been discovered (A. Robert and P. G. Bruce: Nature, vol. 381 (1996) p. 499). The capacity of the layered LiMnO2 based material is about 270 mAh/g, which is more than twice the capacity of the conventional spinel LiMn2O4.

However, if the high-capacity layered LiMnO2 based material is employed as a positive electrode active material of the rechargeable lithium-ion battery, though a sufficient charge/discharge characteristic is obtained at, for example, 55°C, the capacity at room temperature is reduced to about one-third. Moreover, when charge and discharge are repeated at temperature higher than room temperature in order to secure the sufficient charge/discharge characteristic, the capacity is gradually reduced, and the sufficient cyclic resistance is not secured.

An object of the present invention is to provide a positive electrode active material of a layered lithium manganese compound which is excellent in the crystal structure stability.

Another object of the present invention is to provide a manufacturing method of the positive electrode active material of the layered lithium manganese compound.

Still another object of the present invention is to provide a rechargeable lithium-ion battery which employs the above positive electrode active material.

A first aspect of the present invention provides a lithium manganese compound of a layered crystal structure which is represented by a general formula $Li_{1-x}MO_2$ as a positive electrode active material for a rechargeable lithium-ion battery. Here, M is manganese or two or more kinds of metals containing manganese as a main component, and x is a lithium-deficient quantity, and satisfies the following expression:

1/5 < x

According to the first aspect of the present invention, a deficient structure is provided in a lithium site of the layered lithium manganese compound. In addition, since the deficient quantity x is larger than 1/5, a value of bond overlap population (BOP) as an index of the crystal structure stability, which is obtained by calculation using a molecular orbital method, can be increased. Therefore, when the layered lithium manganese compound is employed as a positive electrode active material, cyclic stability can be improved.

A second aspect of the present invention provides a manufacturing method of the positive electrode active material. In the manufacturing method, a lithium compound and a manganese compound are mixed in a ratio equivalent to the composition ratio of Li and Mn in the general formula $Li_{1-x}MO_2$ (x > 1/5). Then, a mixture obtained is baked in a low oxygen concentration atmosphere with an oxygen concentration of 1000 ppm or less.

According to the second aspect of the present invention, by adjusting the oxygen concentration during baking in a proper range, a lithium-deficient type layered lithium manganese compound having high capacity and stability can be obtained.

A third aspect of the present invention provides a rechargeable lithium-ion battery which includes a positive electrode containing the above positive electrode active material; a negative electrode; and an electrolyte interposed between the both electrodes.

According to the third aspect of the present invention, a rechargeable lithium-ion battery having a good cyclic stability and a high battery capacity can be provided.

BRIEF DESCRIPTION OF THE DRAWINGS

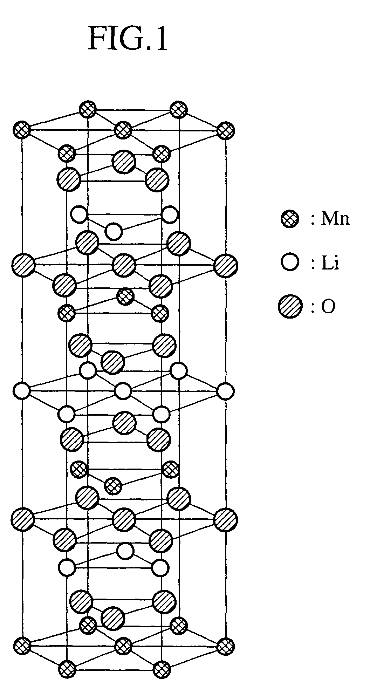

FIG. 1 is a view showing a crystal structure of a layered $LiMO_2$ compound.
FIG. 2 is a flowchart explaining a calculation method using a molecular orbital method.
FIG. 3 is a view showing a cluster model of lithium manganese compound crystal for use in calculation using the molecular orbital method of a first embodiment.
FIG. 4 is a view illustrating structure models showing lithium-deficient states in the cluster shown in FIG. 3.
FIGS. 5, 6 and 7 are tables respectively listing theoretical capacities, BOP values and relative BOP values as indices of crystal structure stability of layered lithium manganese compounds in examples and comparative examples, which are obtained by calculation using the molecular orbital method in a first embodiment.

FIG. 8 is a view showing a cluster model of bonding portions of two metal atoms and oxygen in layered lithium manganese compound crystal for use in calculation using a molecular orbital method in a second embodiment.
FIG. 9 is a view showing a cluster model of bonding portions of three metal atoms and oxygen in the layered lithium manganese compound crystal for use in calculation using the molecular orbital method of the second embodiment.
FIG. 10 is a table listing metal compositions and relative BOP values as indices of crystal structure stability of layered lithium manganese compounds in examples and comparative examples, which are obtained by calculation using the molecular orbital method in the second embodiment.
FIG. 11 is a view showing a structure example of a rechargeable lithium-ion battery using the positive electrode active materials of the first and second embodiments.
FIGS. 12A and 12B are views respectively showing examples of electric vehicles equipped with lithium ion secondary batteries according to the first and second embodiments of the present invention.

DETAILED DESCRIPTION OF THE EMBODIMENTS

[Layered Lithium Manganese Compound of Li-Deficient Type]

The positive electrode active materials according to first and second embodiments of the present invention are layered lithium manganese compounds represented by the general formula $Li_{1-x}MnO_2$. The crystal of each compound can further be represented as $Li_{1-x}Mn_{1-y}M_yO_2$ or $Li_{1-x}Mn_{1-y}M_yO_{2-\delta}$. The layered lithium manganese compound of a Li-deficient type with x larger than 0 is a novel material discovered by the inventors of the present invention, which has been introduced from a designing concept to be described below.

In typical NaCl type MO crystal (where M: metal element, O: oxygen), for example, oxide such as NiO has a crystal structure in which Ni layers and oxidized layers are alternately arrayed in a <111> orientation of the crystal. Moreover, in the conventional layered $LiMO_2$ compound (where M is Ni, Co or Mn), the layered lithium manganese compound taken as an example has a crystal structure to be described below. Here, specifically, oxygen planes and metal planes are alternately and repeatedly arrayed in such a manner as: oxygen layer - Mn layer - oxygen layer - Li layer - oxygen layer - Mn layer - oxygen layer, and further, planes (layers) having metal elements thereon are arrayed regularly and alternately.

As described above, the NaCl type MO crystal and the layered $LiMO_2$ compound are conceived to have structures very similar to each other.

By paying attention to the regular structure described above, the inventors of the present invention found out that the layered $LiMO_2$ compound is composed by repeatedly arraying MO crystal blocks. In other words, the inventors found out that the layered $LiMO_2$ compound is composed by repeatedly arraying [LiO] [MO] blocks, in which MO blocks [MO] and LiO blocks [LiO] are arrayed alternately and repeatedly.

Moreover, when the notation concerning the block structure described above is applied to a crystal structure of the conventionally known sodium manganese oxide $Na_{2/3}MnO_2$, the crystal structure can be represented as $[Na_{2/3}O]$ [MnO]. The crystal structure above is conceived to be a structure obtained by regularly reducing a Na occupation ratio in the [NaO] blocks of the [NaO] [MnO] blocks. This implies that novel layered sodium manganese oxide can be created by varying the Na-deficient quantity.

Similarly, when the notation concerning the block structure described above is applied to the above layered $LiMO_2$ compound ([LiO] [MO]), it is conceived that a novel layered $LiMO_2$ compound can be obtained by regularly reducing a Li occupation ratio in the [LiO] blocks.

Furthermore, with regard to a layered $LiMnO_2$ compound taken as an example of the layered $LiMO_2$ compound, there is a small difference between Li sites and Mn sites, where the "sites" indicate positions occupied by elements in the crystal structure. Therefore, by regularly reducing Mn occupation ratio also in the [MnO] blocks similarly to the [LiO] blocks, it is conceived that the novel layered $LiMnO_2$ compound can be obtained.

Based on the above-described ideas, the inventors of the present invention found a layered lithium manganese compound of Li-deficient type obtained by making Li and Mn regularly deficient from a congruent composition of the layered lithium manganese compound and by substituting Li and Mn by a specified metal according to needs. Moreover, the inventors verified that the above-described material has a stable structure in comparison with the conventional layered lithium manganese compound and is suitable for the positive electrode active material.

[First Embodiment]

In the first embodiment of the present invention, more specific composition of the layered lithium manganese compound of the Li-deficient type obtained through the above-described designing concept is provided. Specifically, in order to obtain composition more suitable for the positive electrode active material of the rechargeable lithium-ion battery, the "BOP" value is obtained by calculation using a molecular orbital method, the structure stability is evaluated, and the Li-deficient quantity x is obtained. Moreover, it is determined whether substitution of Mn for the other metal is carried out, and what a preferable range of oxygen-deficient quantity $\delta$ is by the calculation.

The molecular orbital method is widely known as a method for calculating an electronic state of a material, and is also used for evaluation of the positive electrode active material of a lithium ion battery (Jpn. J. Appl. Phys. vol. 38 p.2024 (1999)).

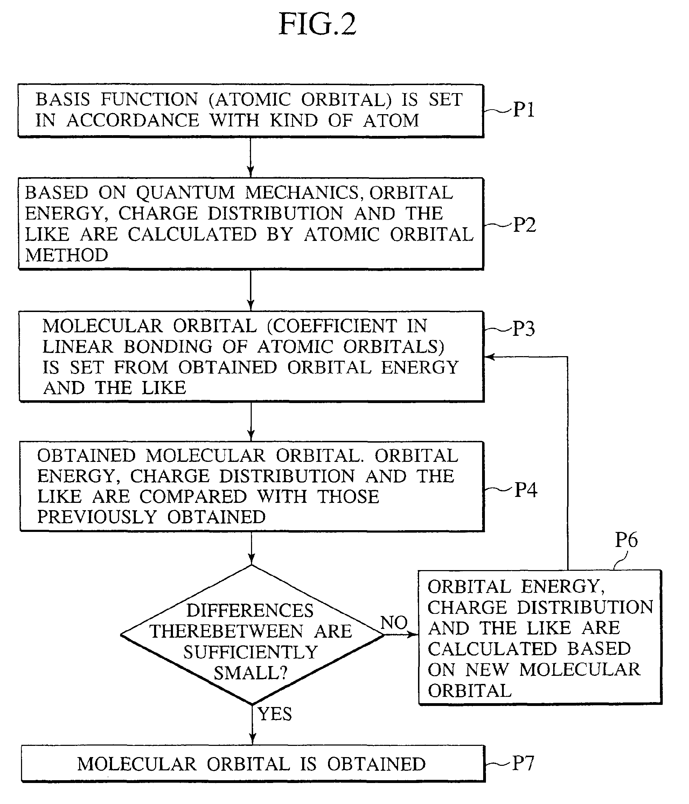

FIG. 2 illustrates procedures of the calculation using the molecular orbital method. As shown in the flowchart, first, a basis function (atomic orbital) is set in accordance with a kind of an atom (P1). Next, based on the quantum mechanics, an orbital energy, charge distribution and the like are calculated by an atomic orbital method (P2). Further, a molecular orbital (coefficient in linear bonding of atomic orbitals) is set from the obtained orbital energy and the like (P3).

The obtained molecular orbital, orbital energy, charge distribution and the like are compared with those previously obtained (P4). If differences therebetween are sufficiently small, that is, if 'Yes' in the flowchart, the molecular orbital is decided. Note that the determination whether or not the differences are sufficiently small is made depending on whether or not the number of effective electrons in each atom is changed before and after the calculation.

If the differences are not small (if 'No'), the orbital energy, the charge distribution and the like are calculated based on a new molecular orbital (P6), and then, the procedures (P3) and (P4) are repeated.

Since the calculation amount becomes enormous if the entire molecules are subjected to the calculation, a cluster method is employed here. The cluster method is a method, in which a small group of atoms as a part of the crystal structures, taken out of molecules, or a cluster, is specified, and the molecular orbital calculation is performed for the cluster.

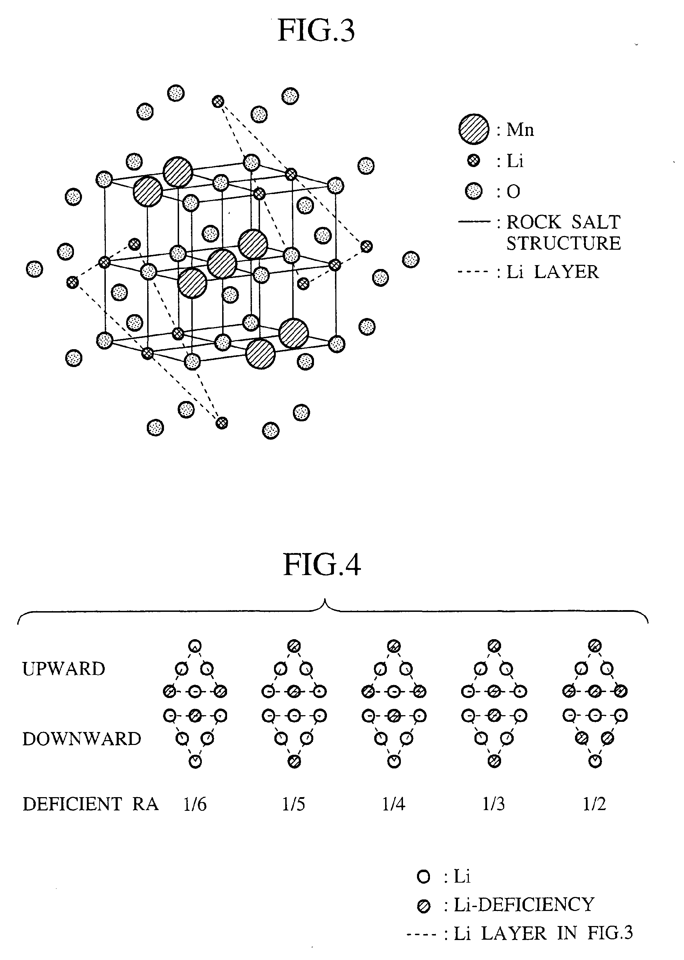

In the first embodiment, $(Li_{12}Mn_7O_{38})^{48-}$ is used as a cluster model. FIG. 3 shows a structure of the cluster. The structure contains up to the fourth proximate atoms with the Mn atoms taken as centers when the layered lithium manganese compound is adapted to the NaCl type crystal structure. Moreover, a cluster model of the Li-deficient structure obtained by removing a part of Li from a Li layer (shown by dotted lines) in the cluster is employed. FIG. 4 shows models of the Li-deficient structures. Each of triangles of FIG. 4 corresponds to the Li layer in FIG. 3.

Moreover, as indices for evaluation of the stability of the crystal structure, the bond overlap population (hereinafter, referred to as "BOP") in between the central Mn atom and the first proximate oxygen atom of the cluster is obtained. The BOP obtained by the "charge distribution" shown in FIG. 2 can evaluate the covalent of the oxygen layer and a metallic base layer represented by the Mn atoms, that is, the bonding stability, in the layered lithium manganese compound of the Li-deficient type. If a BOP value is high, it can be determined that the change in the crystal structure due to a thermal history is small, that is, the stability of the layered lithium manganese compound of the Li-deficient type is high.

Therefore, a mean value of the BOPs of the central Mn atom and the proximate oxygen atoms (three in number) in each cluster can be assigned as an index of the cyclic stability of the cluster.

For the evaluation method using the BOP value, the contents in Jpn. J. Appl. Phys. vol. 37 pp. 6440-6445 (1998) are incorporated herein by reference.

Specific calculation techniques of the above-described molecular orbital method include an ab initio molecular orbital method and a density functional theory (DFT) method. Selection of the calculation techniques may be decided depending on the scale of the cluster model. Since the density functional theory method carries out a coarse approximate calculation when compared to the ab initio molecular orbital method, it is suitable for calculation of a larger scale cluster with the same performance of hardware. Therefore, in the first embodiment, it is desirable that the density functional theory method is employed since a relatively large cluster model as shown in FIG. 3 is used. Specifically, a DV-$X\alpha$ method as one of the density functional theory methods is used. For the DV-$X\alpha$ method, the contents in J. Solid State. Chem. vol. 119, pp. 76-79 (1995) are incorporated by reference.

In the first embodiment, based on the BOP value obtained by use of the molecular orbital method, a positive electrode active material of a layered lithium manganese compound having high-capacity and stability, which is suitable for the rechargeable lithium-ion battery, as described below, can be provided.

Specifically, the positive electrode active material of the first embodiment is a layered lithium manganese compound of the Li-deficient type having a layered crystal structure, in which lithium is partially deficient from a congruent composition. The positive electrode active material is represented by the following general formula (A):

$$Li_{1-x}MO_2 \qquad (A)$$

where x is a Li-deficient quantity, and preferably satisfies the following expression:

$$1/5 < x$$

more preferably, x satisfies the following expression:

$$1/5 < x < 1/2$$

When the Li-deficient quantity x is larger than 1/5, a high BOP value can be obtained. Accordingly, the structure stability due to the Li deficiency can be secured.

However, when the Li-deficient quantity x is larger than 1/2, the Li-containing quantity in the molecular crystal becomes smaller than that of the spinel type $LiMn_2O_4$. Since the capacity of the positive electrode active material depends on the Li-containing quantity, when x is larger than 1/2, it will be difficult to utilize the advantage of the layered structure in that the capacity is large. Therefore, when x is larger than 1/5 and smaller than 1/2, high capacity and cyclic stability of the crystal structure can be ensured.

In the formula (A), M is a metal, and may be Mn or two or more kinds of metals containing Mn as a main component. Moreover, the formula (A) can be represented as the following formula (B)

$$Li_{1-x}Mn_{1-y}M'_yO_2 \qquad (B)$$

where M' denotes a substitution metal or substitution metals for which Mn is partially substituted and y denotes a substitution quantity thereof.

As the substitution metal M', a 3d-transition metal is preferable because of its similarity in the atomic structure to Mn. However, besides the above, a typical metal and other transition metals can also be employed. The 3d-transition metal includes, for example, iron (Fe), nickel (Ni), chromium (Cr), cobalt (Co), manganese (Mn) and the like.

Naturally, as the substitution metal M', one kind of metal selected from the above or a combination of two or more kinds thereof can be employed. In any case, a high BOP value can be obtained.

When the Li-deficient quantity x is represented by a ratio of a/b (x = a/b), a and b should be natural numbers ranging from 1 to 30 and also satisfy a < b.

Moreover, when the M'-substitution quantity y is represented by a ratio of c/d (y = c/d), c and d should be natural numbers ranging from 1 to 30 and also satisfy c < d.

Furthermore, the Li-deficient type layered lithium manganese compound of the first embodiment should have a crystal structure in which the Li-deficient quantity x and Mn-substitution quantity y are regularly controlled.

As a result of Li, M and M' being regularly made deficient and substituted, the crystal structure of the Li-deficient type layered lithium manganese compound can be stabilized. Moreover, when the above-described lithium manganese compound is employed as the positive electrode active material of the rechargeable lithium-ion battery, the cyclic resistance of the battery can be improved.

The Li-deficient quantity x can be adjusted specifically into values such as 1/4, 3/10, 1/3, 3/8, 2/5 and 4/9. The Mn-substitution quantity y can be adjusted specifically into values such as 1/4, 3/10, 1/3, 3/8, 2/5 and 4/9.

Moreover, in terms of uniformity of the composition, a composition variation range of the Li-deficient quantity x is preferably set at ±5%. When the above-described composition variation range exceeds ±5%, the Li-deficient quantity may be made locally uneven and desired performance may not be obtained.

Still further, in terms of uniformity of the composition, a composition variation rage of the M-substitution quantity y is preferably set at ±5%. When the above-described composition variation range exceeds ±5%, the metal composition ratio may be made locally uneven and desired performance may not be obtained.

Furthermore, oxygen (O) in the formula (B) may be made partially deficient from the congruent composition. The layered lithium manganese compound of the Li-deficient type in this case can be represented by the following formula (C).

$$Li_{1-x}Mn_{1-y}M'_yO_{2-\delta} \qquad (C)$$

where $\delta$ denotes an oxygen-deficient quantity, and preferably satisfies the following expression:

$$\delta \leq 0.2$$

When the oxygen-deficient quantity $\delta$ is equal to or less than 0.2, a high BOP value can be obtained. Accordingly, good structure stability can be obtained. while when $\delta$ is greater than 0.2, the oxygen-deficient quantity is too large, and thus the crystal structure tends to be unstable.

Moreover, a part of the substitution metal M' can be substituted for one of the typical metal element or the transition metal element excluding Mn, Cr and Co, or for a metal M'' in accordance with any combination of the above-described metal elements. In this case, the formula (C) can also be represented by the following formula (D).

$$Li_{1-x}Mn_{1-y}M'_{y(1-z)}M''_{yz}O_{2-\delta} \qquad (D)$$

where z is a M'-substitution quantity, and is preferably a rational number. When z is represented as e/f, desirably, e and f are natural numbers ranging from 1 to 30 and also satisfy e < f.

[EXAMPLES]

(Examples 1 to 4, Comparative Examples 1 to 4)

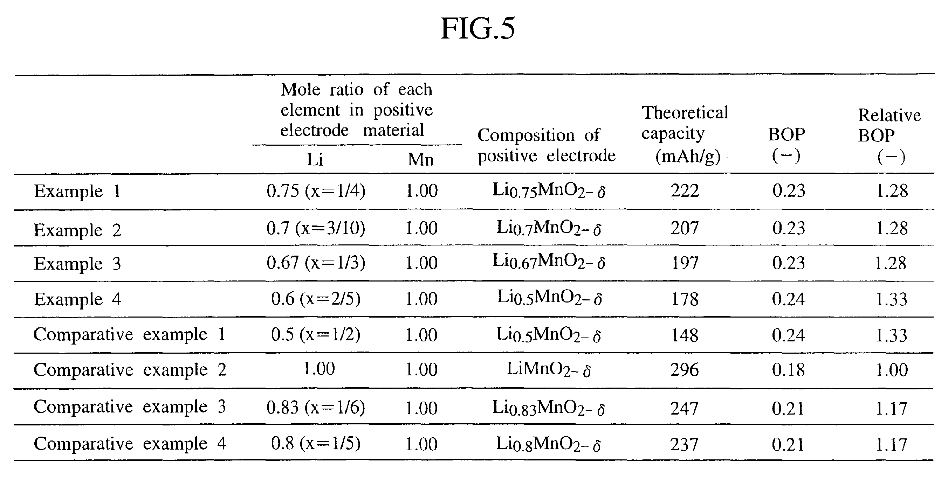

In accordance with the above-described cluster models, the BOP values of each example where the Li-deficient quantities x range from 0 (no deficiency) to 1/2 were evaluated by use of the density functional theory method. Additionally, each of the theoretical capacities of the examples was also obtained. In the examples 1 to 4, the Li-deficient quantities x are 1/4, 3/10, 1/3 and 2/5, respectively. In the comparative examples 1 to 4, the Li-deficient quantities x are 1/2, 0, 1/6 and 1/5, respectively. FIG. 5 is a table listing the evaluation results. In addition, the relative BOP values in the case where the BOP value of the comparative example 2 is set as 1 are also listed.

(Example 1)

For $Li_{0.75}MnO_{2-\delta}$, the BOP value and the theoretical capacity were evaluated. $Li_{0.75}MnO_{2-\delta}$ can be written as $[Li_{3/4}O]$ [MnO] by use of block structure description without consideration of oxygen deficiency, and is represented as $[Li_{1-x}O]$ [MnO] (x = 1/4) in the general block structural formula.

(Example 2)

For $Li_{0.7}MnO_{2-\delta}$, the BOP value and the theoretical capacity were evaluated. $Li_{0.7}MnO_{2-\delta}$ can be written as $[Li_{7/10}O]$ [MnO] by use of block structure description without consideration of oxygen deficiency, and is represented as $[Li_{1-x}O]$ [MnO] (x = 3/10) in the general block structural formula.

(Example 3)

For $Li_{0.67}MnO_{2-\delta}$, the BOP value and the theoretical capacity were evaluated. $Li_{0.67}MnO_{2-\delta}$ can be written as $[Li_{2/3}O]$ [MnO] by use of block structure description without consideration of oxygen deficiency, and is represented as $[Li_{1-x}O]$ [MnO] (x = 1/3) in the general block structural formula.

(Example 4)

For $Li_{0.6}MnO_{2-\delta}$, the BOP value and the theoretical capacity were evaluated. $Li_{0.6}MnO_{2-\delta}$ can be written as $[Li_{3/5}O]$ [MnO] by use of block structure description without consideration of oxygen deficiency, and is represented as $[Li_{1-x}O]$ [MnO] (x = 2/5) in the general block structural formula.

(Comparative example 1)

For $Li_{0.5}MnO_{2-\delta}$, the BOP value and the theoretical capacity were evaluated. $Li_{0.5}MnO_{2-\delta}$ can be written as $[Li_{1/2}O]$ [MnO] by use of block structure description without consideration of oxygen deficiency, and is represented as $[Li_{1-x}O]$ [MnO] (x = 1/2) in the general block structural formula.

(Comparative example 2)

For $LiMnO_{2-\delta}$, the BOP value and the theoretical capacity were evaluated. $LiMnO_{2-\delta}$ can be written

as [LiO] [MnO] by use of block structure description without consideration of oxygen deficiency, and is represented as $[Li_{1-x}O]$ [MnO] (x = 0) in the general block structural formula.

(Comparative example 3)

For $Li_{0.83}MnO_{2-\delta}$, the BOP value and the theoretical capacity were evaluated. $Li_{0.83}MnO_{2-\delta}$ can be written as $[Li_{5/6}O]$ [MnO] by use of block structure description without consideration of oxygen deficiency, and is represented as $[Li_{1-x}O]$ [MnO] (x = 1/6) in the general block structural formula. (Comparative example 4)

For $Li_{0.8}MnO_{2-\delta}$, the BOP value and the theoretical capacity were evaluated. $Li_{0.8}MnO_{2-\delta}$ can be written as $[Li_{4/5}O]$ [MnO] by use of block structure description without consideration of oxygen deficiency, and is represented as $[Li_{1-x}O]$ [MnO] (x = 1/5) in the general block structural formula.

(Examples 5 to 10)

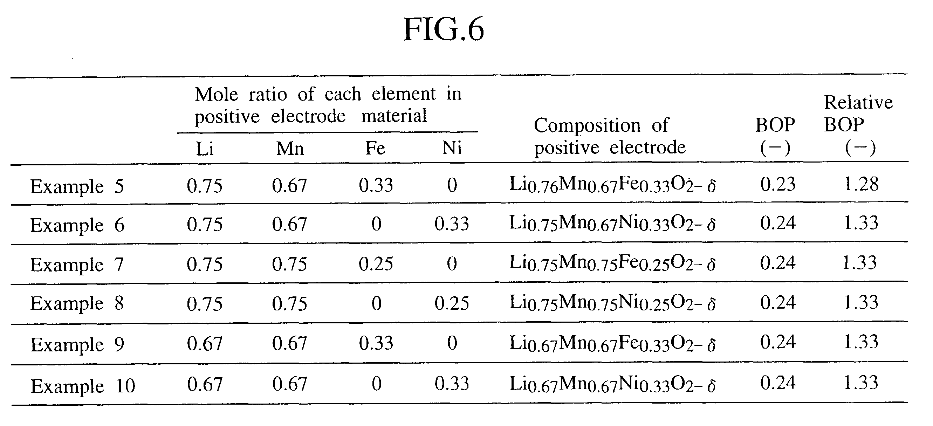

Next, the BOP values of the examples 5 to 10 where the Li-deficient quantities x and the M-substitution quantities y are 1/4 and 1/3, and the substitution metal is Fe and Ni were obtained. FIG. 6 is a table listing the obtained results.

(Example 5)

For $Li_{0.75}Mn_{0.67}Fe_{0.33}O_{2-\delta}$, the BOP value and the theoretical capacity were evaluated. $Li_{0.75}Mn_{0.67}Fe_{0.33}O_{2-\delta}$ can be written as $[Li_{3/4}O]$ $[Mn_{2/3}Fe_{1/3}O]$ by use of block structure description without consideration of oxygen deficiency, and is represented as $[Li_{1-x}O]$ $[Mn_{1-y}M_yO]$ (x = 1/4, y = 1/3, M: Fe) in the general block structural formula.

(Example 6)

For $Li_{0.75}Mn_{0.67}Ni_{0.33}O_{2-\delta}$, the BOP value and the theoretical capacity were evaluated. $Li_{0.75}Mn_{0.67}Ni_{0.33}O_{2-\delta}$ can be written as $[Li_{3/4}O]$ $[Mn_{2/3}Ni_{1/3}O]$ by use of block structure description without consideration of oxygen deficiency, and is represented as $[Li_{1-x}O]$ $[Mn_{1-y}M_yO]$ (x = 1/4, y = 1/3, M: Ni) in the general block structural formula.

(Example 7)

For $Li_{0.75}Mn_{0.75}Fe_{0.25}O_{2-\delta}$, the BOP value and the theoretical capacity were evaluated. $Li_{0.75}Mn_{0.75}Fe_{0.25}O_{2-\delta}$ can be written as $[Li_{3/4}O]$ $[Mn_{3/4}Fe_{1/4}O]$ by use of block structure description without consideration of oxygen deficiency, and is represented as $[Li_{1-x}O]$ $[Mn_{1-y}M_yO]$ (x = 1/4, y = 1/4, M: Fe) in the general block structural formula.

(Example 8)

For $Li_{0.75}Mn_{0.75}Ni_{0.25}O_{2-\delta}$, the BOP value and the theoretical capacity were evaluated. $Li_{0.75}Mn_{0.75}Ni_{0.25}O_{2-\delta}$ can be written as $[Li_{3/4}O]$ $[Mn_{3/4}Ni_{1/4}O]$ by use of block structure description without consideration of oxygen deficiency, and is represented as $[Li_{1-x}O]$ $[Mn_{1-y}M_yO]$ (x = 1/4, y = 1/4, M: Ni) in the general block structural formula.

(Example 9)

For $Li_{0.67}Mn_{0.67}Fe_{0.33}O_{2-\delta}$, the BOP value and the theoretical capacity were evaluated. $Li_{0.67}Mn_{0.67}Fe_{0.33}O_{2-\delta}$ can be written as $[Li_{2/3}O]$ $[Mn_{2/3}Fe_{1/3}O]$ by use of block structure description without consideration of oxygen deficiency, and is represented as $[Li_{1-x}O]$ $[Mn_{1-y}M_yO]$ (x = 1/3, y = 1/3, M: Fe) in the general block structural formula.

(Example 10)

For $Li_{0.67}Mn_{0.67}Ni_{0.33}O_{2-\delta}$, the BOP value and the theoretical capacity were evaluated. $Li_{0.67}Mn_{0.67}Ni_{0.33}O_{2-\delta}$ can be written as $[Li_{2/3}O]$ $[Mn_{2/3}Ni_{1/3}O]$ by use of block structure description without consideration of oxygen deficiency, and is represented as $[Li_{1-x}O]$ $[Mn_{1-y}M_yO]$ (x = 1/3, y = 1/3, M: Ni) in the general block structural formula.

(Examples 11 to 15, Comparative Examples 5 and 6)

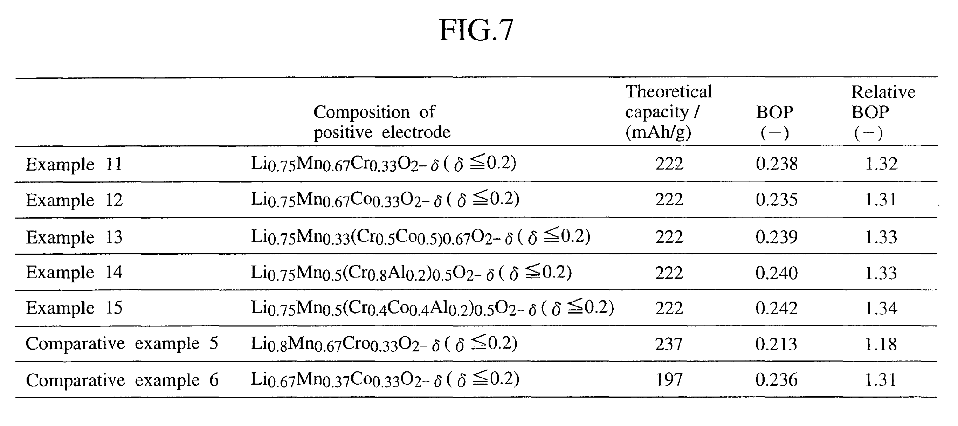

The BOP values of the examples 11 to 15 where the Li-deficient quantities x are 1/4, the Mn-deficient quantities y are 1/3, 2/3 and 1/2, and the substitution metal is Cr, Co and Al were obtained. The BOP values of each of the comparative examples 5 and 6 where the Li-deficient quantities x are 1/5 and 1/3, the Mn-deficient quantities y are 1/3 and 2/3, and the substitution metal is Cr and Co were obtained. FIG. 7 is a table listing the obtained results.

(Example 11)

For $Li_{0.75}Mn_{0.67}Cr_{0.33}O_{2-\delta}$, the BOP value and the theoretical capacity were evaluated. $Li_{0.75}Mn_{0.67}Cr_{0.33}O_{2-\delta}$ can be written as $[Li_{3/4}O]$ $[Mn_{2/3}Cr_{1/3}O]$ by use of block structure description without consideration of oxygen deficiency, and is represented as $[Li_{1-x}O]$ $[Mn_{1-y}M_yO]$ (x = 0.25, y = 0.33, M: Cr) in the general block structural formula.

(Example 12)

For $Li_{0.75}Mn_{0.67}Co_{0.33}O_{2-\delta}$, the BOP value and the theoretical capacity were evaluated. $Li_{0.75}Mn_{0.67}Co_{0.33}O_{2-\delta}$ can be written as $[Li_{3/4}O]$ $[Mn_{2/3}Co_{1/3}O]$ by use of block structure description without consideration of oxygen deficiency, and is represented as $[Li_{1-x}O]$ $[Mn_{1-y}M_yO]$ (x = 0.25, y = 0.33, M: Co) in the general block structural formula.

(Example 13)

For $Li_{0.75}Mn_{0.33}(Cr_{0.5}Co_{0.5})_{0.67}O_{2-\delta}$, the BOP value and the theoretical capacity were evaluated. $Li_{0.75}Mn_{0.33}(Cr_{0.5}Co_{0.5})_{0.67}O_{2-\delta}$ can be written as $[Li_{3/4}O]$ $[Mn_{1/3}Cr_{1/3}Cr_{1/3}O]$ by use of block structure description without consideration of oxygen deficiency, and is represented as $[Li_{1-x}O]$ $[Mn_{1-y}M_yO]$ (x = 0.25, y = 0.67, M: Cr and Co) in the general block structural formula.

(Example 14)

For $Li_{0.75}Mn_{0.5}(Cr_{0.8}Al_{0.2})_{0.5}O_{2-\delta}$, the BOP value and the theoretical capacity were evaluated. $Li_{0.75}Mn_{0.5}(Cr_{0.8}Al_{0.2})_{0.5}O_{2-\delta}$ can be written as $[Li_{3/4}O]$ $[Mn_{5/10}Cr_{4/10}Al_{1/10}O]$ by use of block structure description without consideration of oxygen deficiency, and is represented as $[Li_{1-x}O]$ $[Mn_{1-y}M_{y(1-z)}M'_{yz}O]$ (x = 0.25, y = 0.5, z = 0.2, M: Cr, M': Al) in the general block structural formula.

(Example 15)

For $Li_{0.75}Mn_{0.5}(Cr_{0.4}Co_{0.4}Al_{0.2})_{0.5}O_{2-\delta}$, the BOP value and the theoretical capacity were evaluated. $Li_{0.75}Mn_{0.5}(Cr_{0.4}Co_{0.4}Al_{0.2})_{0.5}O_{2-\delta}$ can be written as $[Li_{3/4}O]$ $[Mn_{5/10}Cr_{2/10}Co_{2/10}Al_{1/10}O]$ by use of block structure description without consideration of oxygen deficiency, and is represented as $[Li_{1-x}O]$ $[Mn_{1-y}M_{y(1-z)}M'_{yz}O]$ (x = 0.25, y = 0.5, z = 0.2, M: Cr and Co, M': Al) in the general block structural formula.

(Comparative example 5)

For $Li_{0.8}Mn_{0.67}Cr_{0.33}O_{2-\delta}$, the BOP value and the theoretical capacity were evaluated. $Li_{0.8}Mn_{0.67}Cr_{0.33}O_{2-\delta}$ can be written as $[Li_{4/5}O]$ $[Mn_{2/3}Cr_{1/3}O]$ by use of block structure description without consideration of oxygen deficiency, and is represented as $[Li_{1-x}O]$ $[Mn_{1-y}M_yO]$ (x = 0.2, y = 0.33, M: Cr) in the general block structural formula.

(Comparative example 6)

For $Li_{0.67}Mn_{0.37}Co_{0.33}O_{2-\delta}$, the BOP value and the theoretical capacity were evaluated. $Li_{0.67}Mn_{0.37}Co_{0.33}O_{2-\delta}$ can be written as $[Li_{2/3}O]$ $[Mn_{2/3}Co_{1/3}O]$ by use of block structure description without consideration of oxygen deficiency, and is represented as $[Li_{1-x}O]$ $[Mn_{1-y}M_yO]$ (x = 0.33, y = 0.33, M: Co) in the general block structural formula.

As shown in the table of FIG. 5, with regard to the lithium ion secondary batteries using the positive electrode active materials of the examples 1 to 4, the BOP values are as large as 0.23 or more, verifying that the cyclic properties are significantly improved.

Moreover, as shown in the table of FIG. 6, with regard to the lithium ion secondary batteries using the positive electrode active materials of the examples 5 to 10, the BOP values are as large as 0.23 or more, verifying that the cyclic stability is high. In addition, the BOP value when Mn is partially substituted for Fe or Ni is larger that when the metallic base is only Mn, verifying that the cyclic stability is improved.

Furthermore, as shown in the table of FIG. 7, with regard to the lithium ion secondary batteries using the positive electrode materials of the examples 11 to 15, the BOP values are larger and the capacities are higher than those of the comparative examples 5 and 6, which do not satisfy the above-conditions. Accordingly, each of the rechargeable lithium batteries of the examples above can be expected for use as a compact, long-life battery for an EV or a HEV.

[Second Embodiment]

In a second embodiment of the present invention, based on the evaluation of the BOP value obtained by use of the molecular orbital method similarly to the first embodiment, material composition more suitable for the positive electrode active material of the rechargeable lithium-ion battery, particularly composition of the metal element, is examined.

It should be noted that, though the positive electrode active material of the second embodiment is also represented by the general formula $Li_{1-x}MO_2$, the main metal composition is not necessarily limited to manganese. Moreover, the positive electrode active material includes the one without lithium deficiency. Accordingly, the positive electrode active material here is referred to simply as a layered lithium compound.

Also in the second embodiment, the molecular orbital calculation using the cluster method is carried out similarly to the first embodiment. Here, a metallic base and oxygen atoms at the periphery thereof in the layered lithium compound are used as a cluster model.

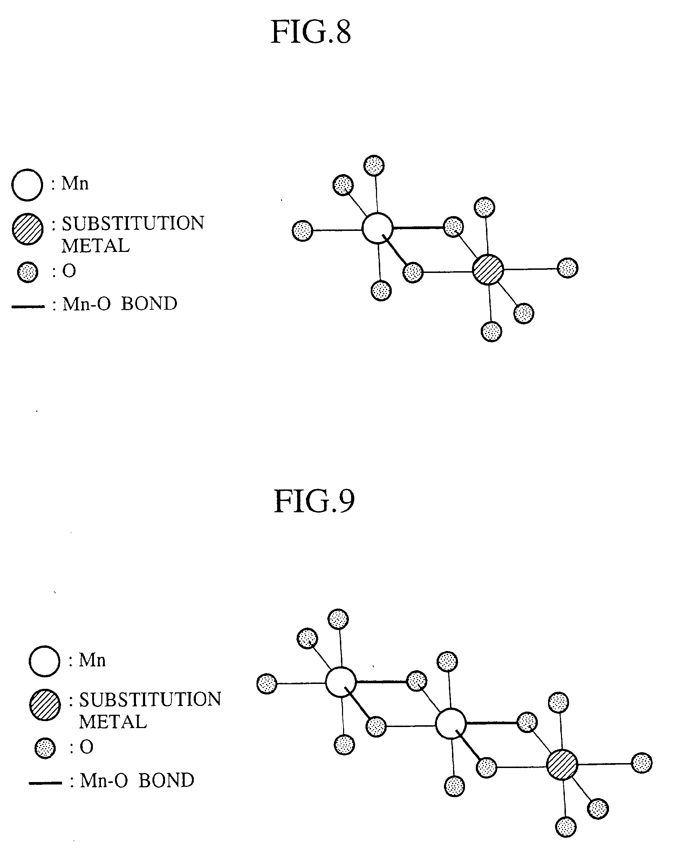

FIG. 8 shows a cluster structure of three metal atoms. Such a cluster reproduces metal atoms of the layered lithium compound and two oxygen layers sandwiching a metal layer represented by the metal atoms. The cluster is a model reasonable for investigating the effect of the metallic base of the layered lithium compound.

In terms of a compounding ratio of the metals, in the layered lithium compound represented by the above-described formula (C), the two atoms cluster shows a compounding ratio of: y = 1/2, and the three atoms cluster shows a compounding ratio of: y = 1/3.

As an index for evaluating the crystal structure stability, the BOP value between the Mn atom in the cluster shown in FIG. 8 and the oxygen atom sandwiched between the Mn atom and the other metal atom is obtained. Thus, the covalent between the metallic base layer represented by the Mn atom and the oxygen layer, that is, the bonding stability is evaluated.

Therefore, when the BOP value is high, it can be determined that the change in the crystal structure due to a thermal history is small, that is, that the stability of the layered lithium compound is high.

Moreover, it can be determined that a mean value of the BOPs of the Mn atom in the cluster and the oxygen atoms, where two oxygen atoms per one Mn atom exist, sandwiched between the Mn atom and the metal atoms adjacent thereto is an index of the stability of the cluster and the crystal structure from which the cluster is taken out.

Note that, in the second embodiment, since the number of constituent atoms of the cluster model to be used is smaller than that of the cluster model used in the first embodiment, the ab initio molecular orbital method should be used as a specific calculation technique of the molecular orbital method. For the calculation using the ab initio molecular orbital method, the contents of Physical Review B, vol. 53, No. 7, pp. 3731-3740 (1996)) and Physical Review B,vol. 57, No. 24, pp. 15211-15218(1998)) are incorporated by reference.

In the second embodiment, by the evaluation of the BOP value, the high-capacity and stable positive electrode active material suitable for the rechargeable lithium-ion battery is obtained as described below.

The layered lithium compound according to the second embodiment is represented by the following general formula (A):

$$Li_{1-x}MO_2 \qquad\qquad (A)$$

where M is two kinds of metal elements with a difference of the number of electrons being an odd number, in which one or both of the metal elements is a 3d-transition metal.

The metal element M should be two kinds of metal elements, and the difference of the number of atoms should be an odd number. If the difference of the number of electrons is an even number, the BOP value is lower than the case where the difference of the number of electrons is an odd number. Thus, the stability of the crystal structure is lowered.

Moreover, one or both of the two kinds of metal elements should be a 3d-transition metal. If both of the metal elements are not 3d-transition metals, the stability of the crystal structure and the resistance of the compound at room temperature are lowered.

The 3d-transition metal may include, for example, manganese (Mn), chromium (Cr), iron (Fe), nickel (Ni), cobalt (Co) and vanadium (V) and the like.

When one of the metal elements M is manganese, the general formula (A) is represented by the fol-

lowing formula (B):

$$Li_{1-x}Mn_{1-y}M'_yO_2 \qquad\qquad (B)$$

where M' is a metal for which manganese is substituted, and y denotes a substitution quantity thereof. As the substitution metal M', chromium, iron and nickel are preferable. With these metals, Mn can readily construct a stable crystal structure.

Note that the effect of the metal composition is also exerted even when the lithium-deficient quantity x is 0, that is, even when the lithium deficiency is not present. However, in order to further stabilize the crystal structure, the lithium-deficient quantity x is preferably at least 0.03 or larger.

Moreover, the lithium-deficient quantity x can be represented by a ratio of a/b (x = a/b). Here, each of a and b should be an arbitrary natural number selected from 1 to 30, and should satisfy: a < b. For example, the lithium-deficient quantity x can be: 1/2, 1/3, 2/3, 1/4, 1/5, 2/5, 1/6 or 1/8.

Furthermore, in consideration of the results in the first embodiment, in order to further stabilize the structure more, the lithium-deficient quantity is set as 1/5 or larger, more preferably set in the following range:

$$1/5 < x < 1/2$$

Moreover, with regard to the Li-deficient quantity x, the composition variation range is preferably set within ±5%. When the composition variation range exceeds ±5%, the crystal structure becomes partially inconsistent with an intended composition, resulting in distortion in some cases.

Furthermore, the Mn substitution quantity y can be represented by a ratio of c/d. Each of c and d is preferably an arbitrary natural number selected from 1 to 30, and satisfies: c < d. When Mn is regularly substituted, the crystal structure is stabilized, and the cyclic resistance of the compound can be improved when used as the positive electrode active material of the rechargeable lithium-ion battery. For example, the Mn substitution quantity y can be adjusted as: 1/2, 1/3, 2/3, 1/4, 1/5, 2/5, 1/6 or 1/8.

Still further, oxygen (O) in the formula (B) may be made partially deficient from the congruent composition. The layered lithium manganese compound of the Li-deficient type in this case can be represented by the following formula (C):

$$Li_{1-x}Mn_{1-y}M'_yO_{2-\delta} \qquad\qquad (C)$$

where δ denotes an oxygen-deficient quantity. As described in the first embodiment, the value of δ is preferably set at 0.2 or less. When $\delta$ is larger than 0.2, the oxygen-deficient quantity is too much to prepare it. Moreover, the one produced tends to have an unstable crystal structure.

Here, $LiMnO_2$ can be written as [LiO] [MnO] by use of block structure description.

Moreover, the layered lithium manganese compound of the Li-deficient type of the second embodiment is composed by controlling the Li-deficient quantity and the element substitution quantity of the Mn sites. Therefore, by use of block structure description, the layered lithium manganese compound represented by the formula (B) can be written as $[Li_{1-x}O]$ $[Mn_{1-y}M'_yO]$.

Furthermore, when the Li-deficient quantity x is 1/3 and the Mn substitution quantity y is 1/2, the layered lithium manganese compound can be written as $[Li_{2/3}O]$ $[Mn_{1/2}M'_{1/2}O]$. For example, when the substitution metal M' is Ni, a Li-deficient metal compound represented by the formula $Li_{2/3}Mn_{1/2}Ni_{1/2}O_2$ is obtained.

By adjusting the Li-deficient quantity x to a specified ratio of a/b and making the Li regularly deficient, the crystal structure can be stabilized, and the cyclic resistance of the compound when used as the positive electrode active material of the rechargeable lithium-ion battery can be improved. Moreover, by adjusting the Mn substitution quantity y to a specified ratio of c/d, making the Mn regularly deficient, and substituting the specified substitution metal M', the resistance and the stability of the compound at high temperature can be obtained.

(EXAMPLES)

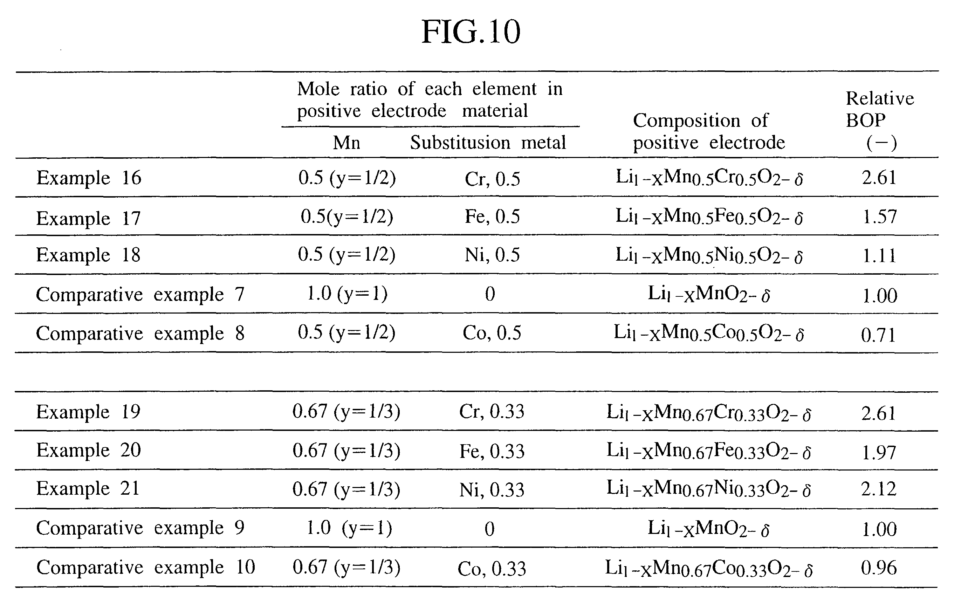

The cluster models shown in FIGs. 8 and 9 were used to perform calculation using the ab initio molecular orbital method, and the BOP values of the layered lithium manganese compounds $(Li_{1-x}Mn_{1-y}M'_yO_{2-\delta})$ in the examples and the comparative examples were obtained. Note that, since direct comparison cannot be made between the BOP value of the cluster of two metal atoms and the BOP value of the cluster of three metal atoms, the BOP value of the cluster without metal substitution (without Mn deficiency) was set as 1.00, and relative comparison thereof was made with the BOP value of the cluster with the same number of metal atoms. As the substitution metal M' partially substituting Mn, examination was carried out for Cr, Fe, Ni and Co. Also, the substitution quantity y was set as: 0, 1/2 and 1/3. FIG. 10 is a table listing the results.

(Example 16)

The cluster model of two metal atoms was used. As metal atoms, Mn and Cr were selected.

(Example 17)

The cluster model of two metal atoms was used. As metal atoms, Mn and Fe were selected.

(Example 18)

The cluster model of two metal atoms was used. As metal atoms, Mn and Ni were selected.

(Example 19)

The cluster model of three metal atoms was used. As metal atoms, Mn (two atoms) and Cr were selected.

(Example 20)

The cluster model of three metal atoms was used. As metal atoms, Mn (two atoms) and Fe were selected.

(Example 21)

The cluster model of three metal atoms was used. As metal atoms, Mn (two atoms) and Ni were selected.

(Comparative example 7)

The cluster model of two metal atoms was used. As metal atoms, Mn (two atoms) was selected.

(Comparative example 8)

The cluster model of two metal atoms was used. As metal atoms, Mn and Co were selected.

(Comparative example 9)

The cluster model of three metal atoms was used. As metal atoms, Mn (three atoms) was selected.

(Comparative example 10)

The cluster model of three metal atoms was used. As metal atoms, Mn (two atoms) and Co were selected.

According to the evaluation results of the above examples and comparative examples, the BOP value when Cr, Fe or Ni in which the difference of the number of atoms with Mn is an odd number is selected as the substitution metal is apparently higher than the BOP value when Co in which the difference of the number of atoms with Mn is an even number and the BOP value when no substitution metal is present (the difference of the number of atoms is 0). Specifically, it is found out that the stability of the crystal structure is high when Mn is made regularly deficient and substituted for a specified metal element as in the embodiment.

Moreover, it is found out that the tendency described above is not affected much by the number of metal atoms contained in the cluster, that is, the compounding ratio of the metals.

Note that, from the results, it can be readily assumed that the tendency is not changed even if the values of the lithium-deficient quantity x and the oxygen-deficient quantity δ are varied.

With regard to the rechargeable lithium batteries using the lithium manganese compound for positive electrode materials of the examples 1 to 5, the BOP values are large and the capacities are high. Accordingly, each of the rechargeable lithium batteries of the examples can be expected for use as a compact, long-life battery for an EV or a HEV.

Although Mn has been set as one of the metals in the above-described examples and comparative examples, it can be assume that the metal can be the one in which two kinds of 3d-transition metal are contained.

[Manufacturing Method of Positive Electrode Active Material]

Next, description will be made for a manufacturing method of the positive electrode active material according to the first embodiment (the layered lithium manganese compound of the Li-deficient type) and the positive electrode active material according to the second embodiment (the layered lithium compound).

In order to obtain each of the positive electrode active materials, specified quantities of the lithium compound and the manganese compound or other metal compounds are mixed so as to obtain a molar ratio of lithium and manganese or other metals in response to the formula of the crystal composition to be prepared, and then the mixture is baked.

Here, as the lithium compound, lithium carbonate, lithium hydroxide, lithium nitrate, lithium acetate or the like can be used. Particularly, lithium carbonate or lithium hydroxide are preferable to be employed. Moreover, the average particle diameter of the lithium compounds described above is desirably 30 μm or less.

Moreover, as the manganese compound, for example, manganese dioxide prepared by electrolysis, manganese dioxide prepared by chemical synthesis, dimanganese trioxide, γ-MnOOH, manganese carbonate, manganese nitrate, manganese acetate or the like can be employed. Moreover, each manganese compound should be employed in the form of powder. The average particle diameter of the manganese compound is preferably set in a range from 0.1 to 100 μm, more preferably, at 20 μm or less. When the average particle diameter of the manganese compound powder is large, reaction of the manganese compound and the lithium compound becomes significantly slow, and uniformity of the products tends to be worse.

Furthermore, the lithium compound and the manganese compound should be mixed with a uniform molar ratio overall. In this case, a carbon-containing compound (desirably, carbon powder such as carbon black and acetylene black) or an organic matter such as citric acid can be added, resulting in efficient reduction of an oxygen partial pressure of the baking atmosphere. A quantity of such additive is preferably set in a range from 0.05 to 10%, more preferably, in a range from 0.1 to 2%. When the quantity of additive is small, an effect thereof tends to be lowered. When the quantity of additive is large, a sub-product tends to be created and the purity of the target product may be worse due to the remains of the added carbon-containing compound.

Still further, the baking of the mixture must be carried out in an atmosphere with a low oxygen concentration. Particularly, the baking is desirably carried out in an atmosphere of nitrogen, argon, or carbon dioxide, that is, in a gas atmosphere not containing oxygen. In this case, the partial pressure of oxygen is preferably 1000 ppm or lower, more preferably, 100 ppm or lower. When the partial pressure of oxygen is more than the above-described value, the baking cannot be carried out in some cases.

Moreover, the baking temperature is preferably fixed at 1100°C or lower, more preferably, 950°C or lower. When the baking temperature exceeds 1100°C, the product tends to be decomposed.

Furthermore, the baking time is preferably set in a range from 1 to 48 hours, more preferably, in a range from 5 to 24 hours. Still further, the baking method is not limited to one-step baking, but a multistep baking with a varying baking temperature may be performed according to needs.

[Rechargeable lithium-ion battery]

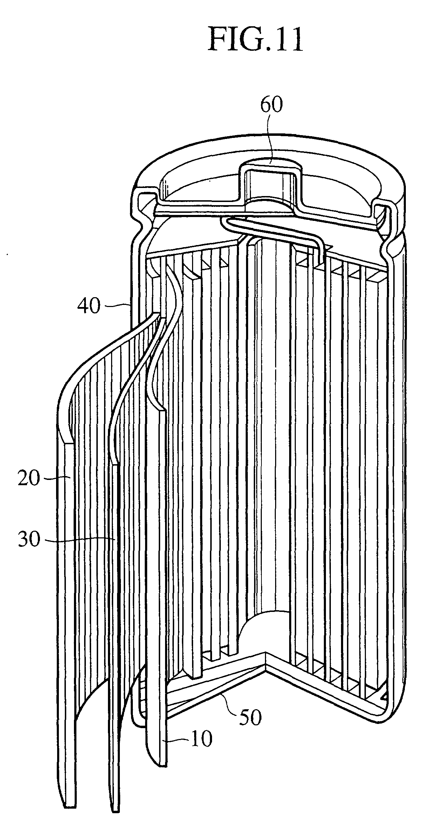

FIG. 11 shows a representative structure example of the rechargeable lithium-ion battery. As shown in the drawing, a wound device in a roll fashion, which includes a positive electrode 10 with a positive electrode active material coated on both surfaces of a metal foil collector, a negative electrode 20 with a negative electrode material coated on both surfaces of a metal foil collector similarly, and a separator 30 interposed between the both electrodes, is accommodated in a cylindrical sealing case 40. An electrolyte (electrolytic solution) is filled between the positive electrode 10 and the negative electrode 20. On the upper portion of the case 40, a cathode terminal 60 is provided, and on the lower portion thereof, an anode terminal 50 is provided.

As the positive electrode active material, the layered lithium manganese compound of the Li-deficient type according to the first embodiment or the layered lithium compound according to the second embodiment can be employed.

As the negative electrode material, an electrode material for use in a typical non-aqueous electrolytic secondary battery is usable. The usable electrode material includes Li metal, complex oxide, nitride, carbon material, and any combination of the above. Specifically, metal lithium, lithium alloys, metal oxide such as $SnSiO_3$, metal nitride such as $LiCoN_2$, a carbon material such as graphite and hard carbon, and any combination of the above can be exemplified. Moreover, as the carbon material, coke, natural graphite, artificial graphite or non-graphitizable carbon can be employed.

Moreover, as the electrolyte, the one obtained by dissolving a lithium salt as an electrolyte into non-aqueous solvent such as organic solvent can be used. As the lithium salt, specifically, $LiClO_4$, $LiAsF_6$, $LiPF_6$, $LiBF_4$, $LiCF_3SO_3$ and $Li(CF_3CO_2)_2N$, which have been publicly known, can be exemplified.

Furthermore, the organic solvent is not particularly limited, but a carbonate group, a lactone group and an ether group can be employed. For example, the solvent such as ethylene carbonate, propylene carbonate, diethyl carbonate, dimethyl carbonate, methyl ethyl carbonate, 1,2-dimethoxyethane, 1,2-diethoxyethane, tetrahydrofuran, 1,3-dioxolane and $\gamma$-butyrolactone can be employed singly or mixedly with two kinds or more.

Still further, the concentration of the electrolyte dissolved in the solvent described above is desirably set in a range of 0.5 to 2.0 mol/L.

Yet further, as the electrolyte, an ion-conductive high-molecular solid electrolyte can be employed. For example, a solid or viscous liquid dispersed evenly in a high-molecular matrix, or the one obtained by immersing a non-aqueous solvent into such a solid or viscous liquid can be can be used. As the high-molecular matrix, polyethylene oxide, polypropylene oxide, polyacrylonitrile, polyvinyliden fluoride and the like can be exemplified.

Moreover, the separator can prevent a short circuit between the positive electrode and the negative electrode. As the separator, for example, a porous sheet, a fine porous film, a non-woven fabric or the like, composed of materials such as polyethylene, polypropylene and cellulose, can be employed.

Since the rechargeable lithium-ion battery of the embodiment is excellent in the cyclic resistance, it is suitable as a battery mounted on the mobile unit such as an electric vehicle.

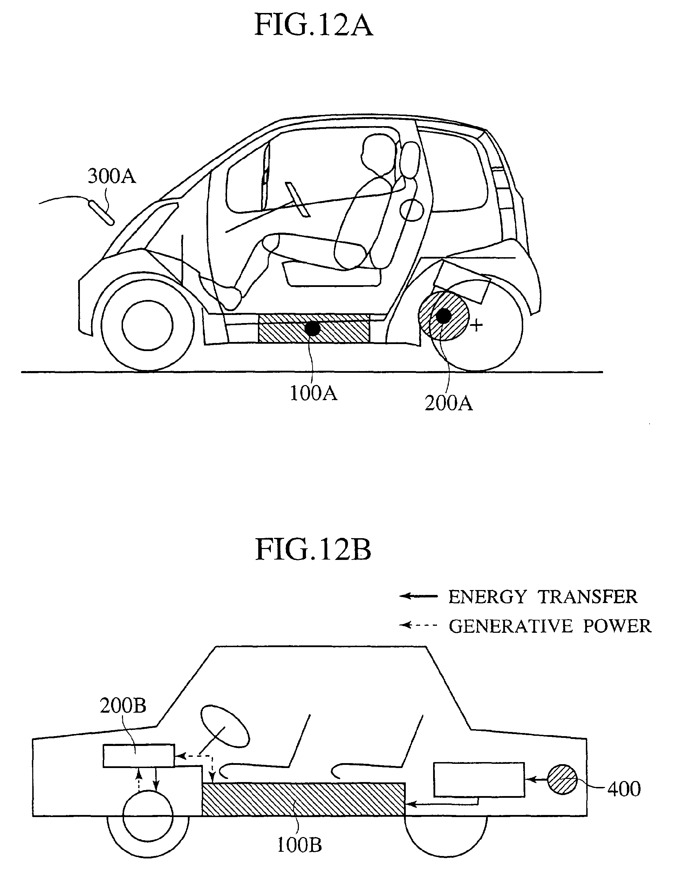

FIGs. 12A and 12B show examples of the electric vehicles mounting the rechargeable lithium batteries of the embodiment. The mounting positions of the batteries are not limited, but as shown in FIGs. 12A and 12B for example, each of the batteries is provided on the bottom of the vehicle body, and each of the charge terminals is provided in the front or rear of the vehicle body so as to facilitate a manual charging operation. The electric energy discharged from the charged battery drive the motor provided in the front or rear of the vehicle body.

The entire contents of Japanese Patent Applications P2000-248961 (filed: August 18, 2000) and P2000-248962 (filed: August 18, 2000) are incorporated herein by reference.

Although the inventions have been described above by reference to certain embodiments of the inventions, the inventions are not limited to the embodiments described above. Modifications and variations of the embodiments described above will occur to those skilled in the art, in light of the above teachings.

The scope of the inventions is defined with reference to the following claims.

**Claims**

1. A positive electrode active material, comprising:

   a layered lithium manganese compound represented by a general formula $Li_{1-x}MO_2$, wherein the M is manganese or a metal of two or more kinds containing manganese as a main component, and the x is a lithium-deficient quantity and satisfies the following expression:

   $$1/5 < x$$

2. The positive electrode active material according to claim 1,

   wherein the x satisfies the following expression:

   $$1/5 < x < 1/2$$

3. The positive electrode active material according to claims 1 or 2,

   wherein the general formula $Li_{1-x}MO_2$ is further represented by a formula $Li_{1-x}Mn_{1-y}M'_yO_2$, the M' is at least one of metals other than manganese, substituting for manganese (Mn) and y is a substitution quantity thereof, the x is represented by a ratio of a/b (x = a/b), each of the a and b is a natural number ranging from 1 to 30, and the a and b satisfy: a < b, the y is represented by a ratio of c/d (y = c/d), each of the c and d is a natural number ranging from 1 to 30, and the c and d satisfy: c < d, and the lithium manganese compound has a crystal structure with the Li-deficient quantity x and the M' substituting quantity y being regularly adjusted.

4. The positive electrode active material according to any one of claims 1 to 3,

   wherein the M' is at least one of selected from 3d-transition metals.

5. The positive electrode active material according to any one of claims 1 to 4,

    wherein the M' is at least one of iron (Fe) and nickel (Ni).

**6.** The positive electrode active material according to any one of claims 1 to 4,

    wherein the M' is chromium (Cr).

**7.** The positive electrode active material according to any one of claims 1 to 6,

    wherein a composition variation range of the x is set within ±5%.

**8.** The positive electrode active material according to any one of claims 1 to 7,

    wherein a composition variation range of the y is set within ±5%.

**9.** The positive electrode active material according to any one of claims 1 to 8,

    wherein the general formula $Li_{1-x}Mn_{1-y}M'_yO_2$ is further represented by a general formula $Li_{1-x}Mn_{1-y}M'_yO_{2-\delta}$, where the $\delta$ denotes an oxygen-deficient quantity and satisfies the following expression:

$$\delta \leq 0.2$$

**10.** The positive electrode active material according to any one of claims 1 to 9,

    wherein the general formula $Li_{1-x}Mn_{1-y}M'_yO_{2-\delta}$ is further represented by a general formula $Li_{1-x}Mn_{1-y}M'_{y(1-z)}M''_{yz}O_{2-\delta}$, where the M'' is at least one metal substituting for the M', the z is a substitution quantity thereof, and is a rational number represented by a ratio of e/f (z = e/f), and each of the e and f is a natural number ranging from 1 to 30 and the e and f satisfy: e < f.

**11.** A method of preparing the positive electrode active material of claim 1, comprising:

    mixing a lithium compound and a manganese compound in a ratio equivalent to a composition ratio of Li and Mn in a general formula; and baking a mixture obtained in the mixing step in an atmosphere with an oxygen concentration of 1000 ppm or lower.

**12.** A rechargeable lithium-ion battery, comprising:

    a positive electrode containing the positive electrode active material according to claim 1; a negative electrode containing at least one selected from the group consisting of a Li metal, complex oxide, nitride and a carbon material; and an electrolyte interposed between the positive and negative electrodes.

# FIG.1

⊗ : Mn

◯ : Li

⊘ : O

# FIG.2

BASIS FUNCTION (ATOMIC ORBITAL) IS SET IN ACCORDANCE WITH KIND OF ATOM —P1

BASED ON QUANTUM MECHANICS, ORBITAL ENERGY, CHARGE DISTRIBUTION AND THE LIKE ARE CALCULATED BY ATOMIC ORBITAL METHOD —P2

MOLECULAR ORBITAL (COEFFICIENT IN LINEAR BONDING OF ATOMIC ORBITALS) IS SET FROM OBTAINED ORBITAL ENERGY AND THE LIKE —P3

OBTAINED MOLECULAR ORBITAL. ORBITAL ENERGY, CHARGE DISTRIBUTION AND THE LIKE ARE COMPARED WITH THOSE PREVIOUSLY OBTAINED —P4

P6

DIFFERENCES THEREBETWEEN ARE SUFFICIENTLY SMALL? — NO → ORBITAL ENERGY, CHARGE DISTRIBUTION AND THE LIKE ARE CALCULATED BASED ON NEW MOLECULAR ORBITAL

YES

MOLECULAR ORBITAL IS OBTAINED —P7

# FIG.3

🍩 : Mn
⊗ : Li
◉ : O
—— : ROCK SALT STRUCTURE
---- : Li LAYER

# FIG.4

| | | | | | |
|---|---|---|---|---|---|
| UPWARD | | | | | |
| DOWNWARD | | | | | |
| DEFICIENT RA | 1/6 | 1/5 | 1/4 | 1/3 | 1/2 |

○ : Li
⊘ : Li-DEFICIENCY
---- : Li LAYER IN FIG.3

16

# FIG.5

| | Mole ratio of each element in positive electrode material | | Composition of positive electrode | Theoretical capacity (mAh/g) | BOP (−) | Relative BOP (−) |
|---|---|---|---|---|---|---|
| | Li | Mn | | | | |
| Example 1 | 0.75 (x=1/4) | 1.00 | $Li_{0.75}MnO_{2-\delta}$ | 222 | 0.23 | 1.28 |
| Example 2 | 0.7 (x=3/10) | 1.00 | $Li_{0.7}MnO_{2-\delta}$ | 207 | 0.23 | 1.28 |
| Example 3 | 0.67 (x=1/3) | 1.00 | $Li_{0.67}MnO_{2-\delta}$ | 197 | 0.23 | 1.28 |
| Example 4 | 0.6 (x=2/5) | 1.00 | $Li_{0.5}MnO_{2-\delta}$ | 178 | 0.24 | 1.33 |
| Comparative example 1 | 0.5 (x=1/2) | 1.00 | $Li_{0.5}MnO_{2-\delta}$ | 148 | 0.24 | 1.33 |
| Comparative example 2 | 1.00 | 1.00 | $LiMnO_{2-\delta}$ | 296 | 0.18 | 1.00 |
| Comparative example 3 | 0.83 (x=1/6) | 1.00 | $Li_{0.83}MnO_{2-\delta}$ | 247 | 0.21 | 1.17 |
| Comparative example 4 | 0.8 (x=1/5) | 1.00 | $Li_{0.8}MnO_{2-\delta}$ | 237 | 0.21 | 1.17 |

# FIG.6

| | Mole ratio of each element in positive electrode material | | | | Composition of positive electrode | BOP (−) | Relative BOP (−) |
|---|---|---|---|---|---|---|---|
| | Li | Mn | Fe | Ni | | | |
| Example 5 | 0.75 | 0.67 | 0.33 | 0 | $Li_{0.76}Mn_{0.67}Fe_{0.33}O_{2-\delta}$ | 0.23 | 1.28 |
| Example 6 | 0.75 | 0.67 | 0 | 0.33 | $Li_{0.75}Mn_{0.67}Ni_{0.33}O_{2-\delta}$ | 0.24 | 1.33 |
| Example 7 | 0.75 | 0.75 | 0.25 | 0 | $Li_{0.75}Mn_{0.75}Fe_{0.25}O_{2-\delta}$ | 0.24 | 1.33 |
| Example 8 | 0.75 | 0.75 | 0 | 0.25 | $Li_{0.75}Mn_{0.75}Ni_{0.25}O_{2-\delta}$ | 0.24 | 1.33 |
| Example 9 | 0.67 | 0.67 | 0.33 | 0 | $Li_{0.67}Mn_{0.67}Fe_{0.33}O_{2-\delta}$ | 0.24 | 1.33 |
| Example 10 | 0.67 | 0.67 | 0 | 0.33 | $Li_{0.67}Mn_{0.67}Ni_{0.33}O_{2-\delta}$ | 0.24 | 1.33 |

# FIG.7

| | Composition of positive electrode | Theoretical capacity / (mAh/g) | BOP (−) | Relative BOP (−) |
|---|---|---|---|---|
| Example 11 | $Li_{0.75}Mn_{0.67}Cr_{0.33}O_{2-\delta}$ ( $\delta \leqq 0.2$) | 222 | 0.238 | 1.32 |
| Example 12 | $Li_{0.75}Mn_{0.67}Co_{0.33}O_{2-\delta}$ ( $\delta \leqq 0.2$) | 222 | 0.235 | 1.31 |
| Example 13 | $Li_{0.75}Mn_{0.33}(Cr_{0.5}Co_{0.5})_{0.67}O_{2-\delta}$ ( $\delta \leqq 0.2$) | 222 | 0.239 | 1.33 |
| Example 14 | $Li_{0.75}Mn_{0.5}(Cr_{0.8}Al_{0.2})_{0.5}O_{2-\delta}$ ( $\delta \leqq 0.2$) | 222 | 0.240 | 1.33 |
| Example 15 | $Li_{0.75}Mn_{0.5}(Cr_{0.4}Co_{0.4}Al_{0.2})_{0.5}O_{2-\delta}$ ( $\delta \leqq 0.2$) | 222 | 0.242 | 1.34 |
| Comparative example 5 | $Li_{0.8}Mn_{0.67}Cro_{0.33}O_{2-\delta}$ ( $\delta \leqq 0.2$) | 237 | 0.213 | 1.18 |
| Comparative example 6 | $Li_{0.67}Mn_{0.37}Co_{0.33}O_{2-\delta}$ ( $\delta \leqq 0.2$) | 197 | 0.236 | 1.31 |

EP 1 180 810 A2

# FIG.8

○ : Mn

◍ : SUBSTITUTION METAL

◉ : O

—— : Mn-O BOND

# FIG.9

○ : Mn

◍ : SUBSTITUTION METAL

◉ : O

—— : Mn-O BOND

# FIG.10

| | Mole ratio of each element in positive electrode material | | Composition of positive electrode | Relative BOP ($-$) |
|---|---|---|---|---|
| | Mn | Substitusion metal | | |
| Example 16 | 0.5 (y=1/2) | Cr, 0.5 | $Li_{1-x}Mn_{0.5}Cr_{0.5}O_{2-\delta}$ | 2.61 |
| Example 17 | 0.5(y=1/2) | Fe, 0.5 | $Li_{1-x}Mn_{0.5}Fe_{0.5}O_{2-\delta}$ | 1.57 |
| Example 18 | 0.5 (y=1/2) | Ni, 0.5 | $Li_{1-x}Mn_{0.5}Ni_{0.5}O_{2-\delta}$ | 1.11 |
| Comparative example 7 | 1.0 (y=1) | 0 | $Li_{1-x}MnO_{2-\delta}$ | 1.00 |
| Comparative example 8 | 0.5 (y=1/2) | Co, 0.5 | $Li_{1-x}Mn_{0.5}Co_{0.5}O_{2-\delta}$ | 0.71 |
| Example 19 | 0.67 (y=1/3) | Cr, 0.33 | $Li_{1-x}Mn_{0.67}Cr_{0.33}O_{2-\delta}$ | 2.61 |
| Example 20 | 0.67 (y=1/3) | Fe, 0.33 | $Li_{1-x}Mn_{0.67}Fe_{0.33}O_{2-\delta}$ | 1.97 |
| Example 21 | 0.67 (y=1/3) | Ni, 0.33 | $Li_{1-x}Mn_{0.67}Ni_{0.33}O_{2-\delta}$ | 2.12 |
| Comparative example 9 | 1.0 (y=1) | 0 | $Li_{1-x}MnO_{2-\delta}$ | 1.00 |
| Comparative example 10 | 0.67 (y=1/3) | Co, 0.33 | $Li_{1-x}Mn_{0.67}Co_{0.33}O_{2-\delta}$ | 0.96 |

# FIG.11

# FIG.12A

300A

100A    200A

# FIG.12B

← ENERGY TRANSFER

←--- GENERATIVE POWER

200B

400

100B